# EUROPÄISCHE PATENTANMELDUNG

(11) **EP 1 571 404 A1**
(43) Veröffentlichungstag der Anmeldung: **07.09.2005**
(21) Anmeldenummer: 05001821.7
(22) Anmeldetag: 28.01.2005
(51) Int. Cl.: F24H 1/18, F28D 20/00, F16L 59/02

(54) **Schichtenspeicher mit einem Gehäuse und einer Isolierung**

(30) Priorität: 05.03.2004 DE 102004010936
(71) Anmelder: Wolf GmbH, 84048 Mainburg (DE)
(72) Erfinder: Kögl, Johann, 84094 Elsendorf (DE); Eigl, Peter, Dipl.-Ing., 84091 Attenhofen (DE)
(74) Vertreter: Popp, Eugen

(57) **Zusammenfassung**

Die Erfindung betrifft einen Schichtenspeicher mit einem Gehäuse, zumindest einem zu isolierenden Behälter sowie einer aus Schalen (10), insbesondere Halbschalen (15), gebildeten Isolierung (20), wobei an den Halbschalen (10) auf der den Behälter und/oder dem Gehäuse zugewandten Seite eine Erhebung (30) oder Schikanen aufweisende Strukturierung (35) vorgesehen ist.

## Beschreibung

Die Erfindung betrifft einen Schichtenspeicher gemäß dem Oberbegriff des Patentanspruchs 1.

Schichtenspeicher der hier fraglichen Art werden üblicherweise in Brennwertthermen, insbesondere Gasbrennwertthermen, verwendet und weisen zu erwärmendes bzw. bereits erwärmtes Wasser auf. Hierbei werden an die Wärmedämmung des Schichtenspeichermoduls hohe Anforderungen gestellt, wobei ein zumeist geringes Platzangebot im Hinblick auf eine hocheffiziente Dämmung, die gewünscht ist, oft Probleme mit sich bringt. Der für eine Isolierung zur Verfügung stehende Platz ist in aller Regel dadurch begrenzt, daß der Schichtenspeicher bzw. Speicherwassererwärmer innerhalb eines Gehäuses untergebracht ist. Somit steht für eine Isolierung nur der Raum zwischen dem Schichtenspeicher und einer Gehäusewandung zur Verfügung.

Eine Variante, die gemäß dem Stand der Technik Verwendung findet, besteht in einem Ausschäumen dieses Raums, beispielsweise mittels Polyurethanschaum. Diese ist jedoch sehr aufwendig und verursacht hohe Material- und Werkzeugkosten, sowohl im Hinblick auf die An- bzw. Einbringung der Schaumisolierung als auch im Hinblick auf eventuelle Reparaturen, Wartungsarbeiten oder ein Recycling.

Eine andere Wärmedämm-Alternative besteht in der Verwendung von Halbschalen aus einem Dämmaterial, wie beispielsweise expandiertem Polystyrol, das ähnlich gute Dämmeigenschaften wie eine Polyurethan-Schaumisolierung aufweist.

Eine Problematik bei derartigen Halbschalen-Isolierungen besteht jedoch darin, daß an den Stoßstellen der Halbschalen in aller Regel massive Undichtigkeiten auftreten, die zu hohen Wärmeverlusten führen. Um das Auftreten dieser thermischen Undichtigkeiten an den Stoßstellen zu vermeiden, werden im Stand der Technik Bänder aus Kunststoff oder Stahl um die Behälterisolierung gelegt, wobei aufgrund der Zugkraft der Bänder die beiden Halbschalen zusammengepreßt werden. Diese Maßnahme hat jedoch kaum Besserungen hinsichtlich des Mangels an thermischer Dichtigkeit gebracht, da die Bänder aufgrund von Wärmedehnungen, die insbesondere im Betrieb der Brennwerttherme auftreten, locker werden und zu Auskühlveriusten aufgrund von Luftzirkulation sowohl innerhalb der Isolierung als auch an Schwachstellen durch diese hindurch sowie zu vorgenannten Undichtigkeiten führen. Eine schnelle Auskühlung durch auftretende Spaltströmungen führt wiederum zu hohen Wärmeverlusten und daraus resultierenden hohen Betriebskosten, die u.a. im Rahmen einer allgemeinen Energieeinsparpflicht zu unterbinden wären.

Die Aufgabe der vorliegenden Erfindung besteht darin, eine einfach anzuwendende und kostengünstige Isolierung für Schichtenspeicher zur Verfügung zu stellen, welche die vorgenannten Nachteile vermeidet und eine Minimierung der Wärmeverluste gegenüber bisher üblichen Isolierungen ermöglicht.

Diese Aufgabe wird durch einen Schichtenspeicher gemäß Patentanspruch 1 gelöst.

Insbesondere wird die Aufgabe durch einen Schichtenspeicher mit einem Gehäuse, zumindest einem zu isolierenden Behälter sowie einer aus Schalen, insbesondere Halbschalen, gebildeten Isolierung gelöst, wobei an den Halbschalen auf der dem Behälter und/oder dem Gehäuse zugewandten Seite eine Erhebungen oder Schikanen aufweisende Strukturierung vorgesehen ist.

Die Schalen bestehen aus zwei speziell geformten Halbschalen aus Styropor oder vorzugsweise einem expandiertem Polystyrol, das aus Hartschaum ausgebildet sein kann. Diese Halbschalen werden im Gehäuse gehalten und sind in aller Regel auf einer Konsole angeordnet, welche die Halbschalen abstützt. Die Verbindung der Halbschalen, die gemäß einer bevorzugten Ausführungsform als zusammenwirkende Schalenelemente gestaltet und identisch ausgebildet sind, erfolgt vorzugsweise mittels einer Rast- und/oder Schnappverbindung. Mittels der Rast- und/oder Schnappverbindung werden die zusammenwirkenden Schalenelemente spaltfrei so verbunden, daß eine thermische Isolierung der Schalenelemente im Bereich einer Verbindungsstelle zwischen den einzelnen Halbschalen im wesentlichen derjenigen Isolierung entspricht, die an angrenzenden Bereichen der Verbindungsstelle vorgesehen ist. Durch eine ineinandergreifende und ggf. einen potentiellen Spalt überspannende Ausgestaltung der Rast- und/oder Schnappverbindung wird eine Spaltströmung aufgrund des konstruktiv bedingten erfindungsgemäß vorgesehenen Hindernisses unmöglich gemacht.

Auf diese Weise wird eine den Schichtenspeicher umhüllende Isolierung ermöglicht, die ohne Undichtigkeiten ausgebildet ist und keine Spaltströmungen zuläßt, so daß Wärmeverluste aufgrund von Undichtigkeiten der Isolierung minimiert, d.h. pratktisch nicht mehr vorhanden sind.

Erfindungsgemäß sind Elemente der Rast- und/oder Schnappverbindung einstückig mit den Schalenelementen ausgebildet, so daß diese Verbindungselemente zum einen unverlierbar sind und darüber hinaus dieselben Isoliereigenschaften aufweisen wie die Schalenelemente selbst. Mittels der Rast- und/oder Schnappverbindung wird für einen festen und eng anliegenden Sitz der Halbschalen an dem Speicherwassererwärmer, der in aller Regel aus Edelstahl ausgebildet ist, gesorgt, wobei gleichzeitig die Montage der Halbschalen äußerst einfach ist. Die Halbschalen sind vorzugsweise exakt an eine Form des Schichtenspeichers angepaßt bzw. anpaßbar.

Die Verbindung der beiden identischen Schalen ist vorzugsweise so ausgebildet, daß nach einem Einrasten bzw. Einschnappen ein Lösen der Verbindung nur noch durch eine Materialzerstörung möglich ist. Es sei an dieser Stelle jedoch angemerkt, daß, beispielsweise für Versuchszwecke, auch eine, insbesondere unter Zuhilfenahme von Spezialwerkzeugen, lösbare Verbindungsvorrichtung für die beiden Halbschalen in den Umfang der Erfindung fällt und vorgesehen sein kann.

Erfindungsgemäß sind die vorgenannten Erhebungen linienförmig ausgebildet, wobei diese in montiertem Zustand der Halbschalen zumindest eine, den Behälter im wesentlichen horizontal umlaufende, Strukturierung ausbilden. Die Erhebungen können durchgehend umlaufend oder unterbrochen sein, wobei eine durchgängige Ausbildung bevorzugt ist. Ebenso können die Erhebungen zickzack- oder wellenförmig, ggf. mit Verbreiterungen oder Engstellen versehen, ausgebildet sein.

Diese neue konstruktive Lösung ermöglicht in vorteilhafter Weise eine perfekte und dauerhafte Funktion der Wärmedämmung und dient gleichzeitig einem Toleranzausgleich zwischen dem Behälter und der Isolierung sowie zwischen der Isolierung und dem die Isolierung umschließenden Gehäuse. Insbesondere sind mehrere vertikal beabstandete und horizontal umlaufende Erhebungen bzw. Schikanen am inneren Umfang der Isolierschalen vorgesehen. Mit diesen Anformungen werden, wie vorerwähnt, zum einen Behältertoleranzen und Wärmespannungen ausgeglichen und zum zweiten eine Begrenzung des Luftspalts zwischen dem Behältermantel und der Isolierung gewährleistet. In montiertem Zustand werden die Erhebungen erfindungsgemäß bei Bedarf, d.h. im Zuge der Montage oder während des Betriebs, zusammengedrückt und ermöglichen einen festen Sitz des Behälters in der Isolierung, respektive der Isolierung an dem Behälter, wobei eine Luftzirkulation, insbesondere in Vertikalrichtung, zwischen dem bzw. den Behälter(n), zwischen dem bzw. den Behälter(n) und der Isolierung sowie zwischen der Isolierung und dem Gehäuse wirkungsvoll unterbunden ist.

Durch die abgeschlossenen Bereiche, die durch die den Behälter umlaufenden Erhebungen definiert sind, wird die vertikale Luftzirkulation über die Behälterlänge, insbesondere auch bei Durchmessertoleranzen, unterbunden. Da die Erhebungen innerhalb der Halbschalen einstückig ausgebildet, respektive an diese angeformt sind, sind deshalb in vorteilhafter Weise keine weiteren Bauteile notwendig.

Ein weiterer wesentlicher Vorteil der erfindungsgemäßen Vorrichtung besteht darin, daß durch die Erhebungen, bzw. Strukturierungen, vor allem auch im Betrieb des Schichtenspeichers auftretende Maß-Toleranzen ausgeglichen werden. Dies gilt sowohl für einen eventuellen Zwischenraum zwischen Isolierung und Behälter aus auch für einen solchen zwischen Isolierung und dem Gehäuse. Derartige Hohlräume, die, bedingt durch darin auftretende Hohlraumströmungen, bei herkömmlichen Schichtenspeichern und deren Isolierungen zu hohen Wärmeverlusten führten, sind erfindungsgemäß minimiert bzw. nicht vorhanden und somit unproblematisch, da mit der Anbringung der Halbschalen-Isolierung automatisch ein Ausgleich dieser Toleranzen erfolgt. Gemäß einer bevorzugten Ausführungsform sind die Erhebungen teilelastisch, d.h. rückstellbar, ausgebildet.

Gemäß einer weiteren bevorzugten Ausführungsform der Erfindung ist die Isolierung, bzw. sind die die Isolierung bildenden Halbschalen so ausgebildet, daß der Behälter, d.h. der Speicherwassererwärmer bzw. der Schichtenspeicher, insbesondere im Falle einer geschlossenen Isolierung von der Isolierung getragen wird, ohne daß zusätzliche Abstützungen zwischen Behälter und Gehäuse notwendig sind, die als Wärmebrücken dienen würden. Somit entfallen gemäß der erfindungsgemäßen Ausführung die mit solchen Wärmebrücken einhergehenden bekannten Nachteile des Standes der Technik.

Die Isolierung - als solche ist im Rahmen dieser Erfindung die aus den Schalenelementen gebildete geschlossene, d.h. eingerastete bzw. eingeschnappte oder auf sonstige Weise verbundene Gesamtheit der Schalenelemente zu verstehen - die den Schichtenspeicher umgibt, ist erfindungsgemäß so ausgebildet, daß sie eine im wesentlichen gleichmäßige Gewichtsverteilung des Behälters auf eine Konsole bzw. einen Unterbau oder eine Unterstützung gewährleistet. Die Konsole dient hierbei der Abstützung der Einheit aus Isolierung und Schichtenspeicher sowie gegebenenfalls des Gehäuses. Um eine solche gleichmäßige Gewichtsverteilung des Behälters zu ermöglichen und um eine optimale Anpassung der Schalenelemente an den Schichtenspeicher zu erreichen, weisen die Schalenelemente in deren Außenbereich ebenfalls eine Konturierung auf, die ebenfalls in Form von Erhebungen ausgebildet sein kann. In bevorzugter Weise weist die Isolierung hierzu ggf. zudem, insbesondere in Eckbereichen, eine Geometrie, beispielsweise in Form von Rundungsradien oder Sollverformungsbereichen auf, die bei eingebautem Behälter einen erhöhten Anpreßdruck der Isolierung an den Behälter bewirkt. Dieser Anpreßdruck ist in vorteilhafter Weise durch die Gewichtskraft des Behälters bedingt, die auf einen unteren Abschnitt der Isolierung wirkt und diesen so verformt, daß beim Zusammenwirken mit dem Gehäuse eine Preßanpassung der Isolierung an den Schichtenspeicher einerseits sowie ggf. auch an das Gehäuse erfolgt. Auf diese Weise wird der Andruck der Isolierschalen an den Behältermantel verstärkt und zusätzlich werden Gehäusetoleranzen wirkungsvoll ausgeglichen.

In erfindungsgemäßer Weise wird diese Funktion durch entsprechende Radien an den Halbschalen erreicht, wobei durch einen gegenüber dem Eckradius des Gehäuses verringerten Eckradius der Isolierung eine verringerte Anpreßfläche erreicht wird, die wiederum eine höhere wirksame Anpreßkraft der Isolierschale an den Behälter bewirkt. Dies ist vor allem dann gegeben, wenn sich der Behälter mit der Isolierung in dem Gehäuse setzt.

In bevorzugter Weise können die die Isolierung bildenden Sthalenelemente in den entsprechenden Anpreßzonen Sollverformungsbereiche aufweisen. Diese sind beispielsweise durch eine reduzierte Materialfestigkeit und/oder eine reduzierte Materialdicke definiert.

Erfindungsgemäß weisen die Halbschalen eines oder mehrere der folgenden Materialien auf: Schaumstoff-Dämmaterialien und/oder Hartschaumdämmstoffe, insbesondere aus Polystyrol, vorzugsweise expandiertem Polystyrol, Polyurethan, Polyethylen, Aminoplaste(n), Kunststoffharz(en) oder Polyvinylchlorid. Diese Materialien sind kostengünstig, lassen sich in nahezu jede gewünschte Form problemlos verarbeiten und weisen eine hohe thermische Isolierwirkung auf. Es sei jedoch an dieser Stelle betont, daß für die erfindungsgemäße Vorrichtung bevorzugt expandiertes Polystyrol verwendet wird, da dieses auch unter umweltrelevanten, d.h. unter Gesichtspunkten der Wiederverwertbarkeit, unproblematisch ist.

Des weiteren ist erfindungsgemäß vorgesehen, daß die Isolierung den Schichtenspeicher im wesentlichen vollständig umhüllt und ein Zugang zu dem Behälter nur von einer thermisch unkritischen Seite, d.h. bei einem warmen Behälter von unten, möglich ist. Auf diese Weise wird gewährleistet, daß der Behälter an seiner Oberseite nicht abkühlt, was zu hohen Wärmeverlusten führen würde.

Zusammenfassend kann festgehalten werden, daß die an der Isolierung vorgesehenen inneren Erhebungen in vorteilhafter Weise dazu dienen, Toleranzen zwischen Behälter und Isolierung auszugleichen sowie eine exakte Anpassung der Isolierung an den Behälter zu ermöglichen. Darüber hinaus wird eine unerwünschte Luftzirkulation mit Wärmeverlusten innerhalb der Isolierung unterbunden und es werden Toleranzen, die (vor allem im Betriebszustand) zu einer Setzung führen, aufgenommen bzw. ebenfalls ausgeglichen. Selbiges gilt für Temperaturspannungen, die im Betrieb zwangsläufig auftreten, und die bisher nicht behebbar bzw. ausgleichbar waren. Ein weiterer Vorteil besteht in einer einfachen und schnellen Montage der Isolierung mit einem äußerst geringen Kraftaufwand, da die Isolierung lediglich an den Behälter angelegt und eingerastet werden muß. Bisher problematische Setzüngsrisse oder Materialsetzungen an sich treten mittels der erfindungsgemäßen Vorrichtung nicht mehr auf. Entsprechende negative Beeinflussungen der Wärmedämmung unterbleiben.

Durch die vorerwähnten Erhebungen an der Außenseite der Isolierung bzw. durch die vorerwähnten Radien werden des weiteren Toleranzen zwischen dem Gehäuse und der Isolierung ausgeglichen. Darüber hinaus wird das Behältergewicht ohne die Notwendigkeit einer zusätzlichen Abstützung über die Isolierung gleichmäßig auf die Konsole verteilt. Aufgrund der bevorzugt unlösbaren Verbindung der Schalenelemente miteinander wird eine Rißbildung in der Isolierung vermieden. Durch die optimale Anpassung der Schalenelemente an das Gehäuse, respektive der zusammengesetzten Isolierung an das Gehäuse, wird eine maximale Wärmedämmung ermöglicht, wobei durch unten an dem Schichtenspeicher angebrachte hydraulische Anschlüsse und eine damit ermöglichte geschlossene obere Dämmschicht des weiteren ein Wärmeverlust minimiert wird. Aufgrund der unten liegenden Anschlüsse besteht darüber hinaus keine Gefahr, daß Wasser hinter die Isolierung eindringt. In vorteilhafter Weise ist somit eine gleichmäßige und dauerhafte Isolierwirkung mit einer hohen Lebensdauer der beteiligten Komponenten gewährleistet. Als weiterer Vorteil ist zu nennen, daß sich die Halbschalen, aber auch die Isolierung in ihrer Gesamtheit, leicht und bequem in das Gerätegehäuse einbauen läßt. Hierzu trägt u.a. auch das geringe Gewicht der Isolierung bei.

Weitere Ausführungsformen der Erfindung ergeben sich aus den Unteransprüchen.

Nachfolgend wird die Erfindung anhand von Ausführungsbeispielen beschrieben, die anhand der Abbildungen näher erläutert werden. Hierbei zeigen:
- Fig. 1: eine schematische Darstellung einer erfindungsgemäßen Halbschale;
- Fig. 2: eine Ausschnittsvergrößerung der Halbschale gemäß Fig. 1;
- Fig. 3: eine weitere Ausschnittsvergrößerung der Halbschale gemäß Fig. 1;
- Fig. 4: eine schematische Darstellung einer erfindungsgemäßen Geometrie einer Halbschale gemäß Fig. 1.

In der nachfolgenden Beschreibung werden für gleiche und gleichwirkende Teile dieselben Bezugsziffern verwendet.

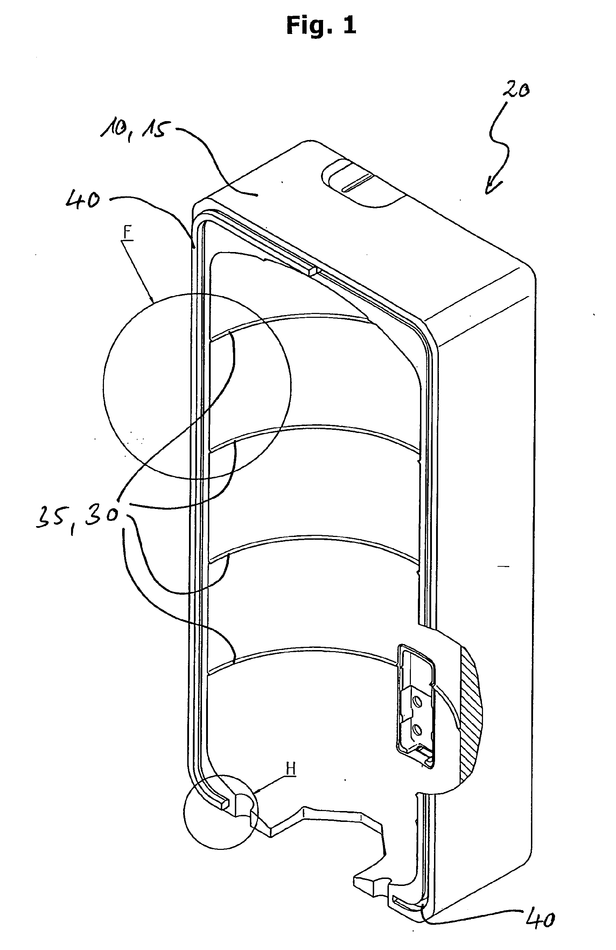

Fig. 1 zeigt eine Halbschale 10, 15 als Teil einer Isolierung 20, die für einen Speicherwassererwärmer innerhalb eines Gehäuses vorgesehen ist. Die Halbschale 15 weist in ihrem Inneren Erhebungen 30 auf, die eine Strukturierung 35 bilden. Die Erhebungen sind so ausgebildet, daß sie im wesentlichen horizontal verlaufen und einen eingesetzten Behälter linien- bzw. ringförmig an vier in etwa gleich beabstandeten Stellen seiner Vertikalausdehnung umgeben, wenn die Isolierung 20 unter Zuhilfenahme einer zweiten Halbschale 15 geschlossen ist. Die Halbschale 15 bzw. das Schalenelement 10 weist eine Rast- bzw. Schnappverbindung 40 auf, die in Form einer "Nut- und Federvorrichtung" 40 vorgesehen ist. Die Schalenelemente 10 sind erfindungsgemäß identisch aufgebaut, so daß beim Zusammenfügen von zwei Halbschalen 15 ein Verwechseln in vorteilhafter Weise nicht möglich ist. Im rechten Teil der Figur ist ein Schnitt in die Halbschale eingezeichnet, der die räumliche Darstellung der Halbschale besser veranschaulichen soll.

Die Nut- und Federvorrichtung 40 ist so ausgebildet, daß Nut und Feder bei einem Zusammensetzen von zwei Halbschalen 15 miteinander in Eingriff kommen und bei einem festen Zusammenfügen der Halbschalen 15 ineinander einrasten. Ein Trennen der Halbschalen 15 ist dann nur noch zerstörerisch möglich. Selbstverständlich kann ein zusätzlicher Klebstoff verwendet werden, ist jedoch eigentlich nicht notwendig.

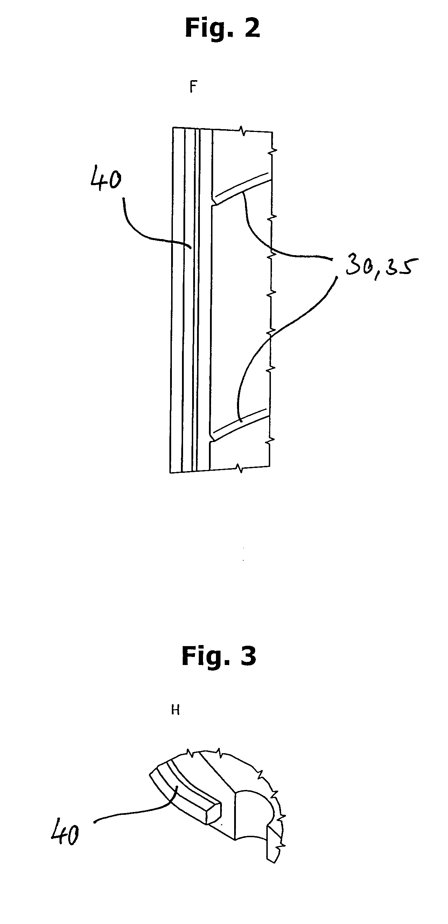

Fig. 2 zeigt eine Ausschnittsvergrößerung des mit F gekennzeichneten und mit einem Kreis umrahmten Abschnitts der Rast- bzw. Schnappverbindung 40 im linken Teil der Fig. 1. Es sind hier in vergrößerter Darstellung deutlich die Feder 40 die linienförmigen Erhebungen 30, 35 zu erkennen, die im Inneren der Halbschale 15 ausgebildet sind.

Fig. 3 zeigt eine Ausschnittsvergrößerung des in Fig. 1 mit H gekennzeichneten und mit einem Kreis umrahmten Abschnitts, der im linken unteren Bereich der Halbschale eingezeichnet ist. Gemäß Fig. 3 ist die konisch zulaufende Feder 40 deutlich zu erkennen, die doppelkeilförmig, also sowohl zu ihrem äußeren Ende, als auch in Richtung Halbschale 15 verjüngt ausgebildet ist und in ihrer Mitte einen verbreiterten Steg aufweist.

Beim Zusammenbau zweier Halbschalen 15 wird die Feder 40 in eine damit korrespondierende Nut 40 eingedrückt, wobei der Steg in eine entsprechende verbreiterte Ausnehmung der Nut eingreift und zu einem sicheren Halt der beiden Halbschalen 15 aneinander führt. Ein Lösen der Halbschalen ist nur noch zerstörerisch oder unter Zuhilfenahme von Spezialwerkzeugen möglich. Eine Spaltströmung, die zu einem Wärmeverlust des Schichtenspeichers führen würde, ist an der Verbindungsstelle von zwei Halbschalen 15 nicht mehr möglich, da die Rast- bzw. Schnappverbindung 40 einerseits die Bildung eines Spaltes nicht mehr zuläßt und zum anderen der Spalt ohnehin durch die Nut- und Federverbindung strömungsmäßig verschlossen ist.

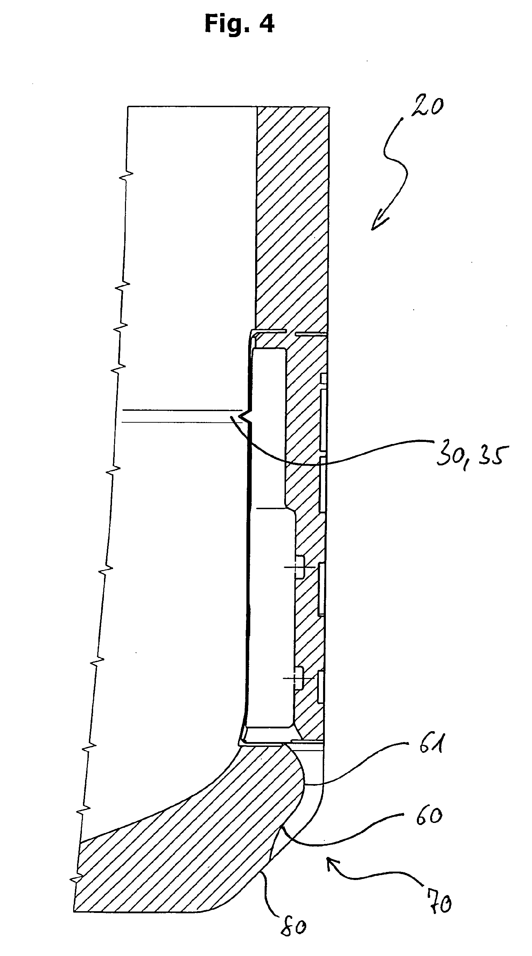

Gemäß Fig. 4 ist ein erfindungsgemäßer Eckbereich 50 einer Halbschale 15 gezeigt, der eine Abschrägung 80 aufweist, die ein "Selbstjustieren" der Halbschale innerhalb des Gehäuses ermöglicht. Des weiteren weist die Halbschale einen Sollverformungsbereich 70 sowie unterschiedliche Rundungsradien 60, 61 auf, die einen Anpreßdruck der Isolier-Halbschalen 15 an den Behälter bei eingesetztem Behälter bewirken, wenn die Gesamtheit aus Behälter und Isolierung in dem Gehäuse angeordnet ist. Der Sollverformungsbereich weist zwei verschiedene Materialfestigkeiten auf, die durch einen schraffierten Bereich mit einer hohen Materialfestigkeit und einen nicht schraffierten Bereich mit einer geringeren Materialfestigkeit gekennzeichnet sind. Wenn der Schichtenspeicher mit der ihn umhüllenden Isolierung 20 in das Gehäuse eingesetzt ist, drückt eine untere Gehäusewand gegen den Bereich, dessen Rundungsradius mit dem Bezugszeichen 61 gekennzeichnet ist, und drückt auf diese Weise die Isolierung verstärkt an den Schichtenspeicher, so daß ein eventueller Spalt zwischen dem Schichtenspeicher und der Isolierung 20 minimiert wird und eine Luftzirkulation zwischen Behälter und Isolierung 20 auf diese Weise unterbunden wird.

Des weiteren ist in Fig. 4 eine Erhebung 30, 35 zu erkennen, die ebenfalls zum Unterbinden einer Luftzirkulation zwischen Isolierung 20 und Behälter an den Behälter angepreßt wird.

An dieser Stelle sei darauf hingewiesen, daß alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichen

- 10: Schale/Schalenelement
- 15: Halbschale
- 20: Isolierung
- 30: Erhebungen
- 35: Strukturierung
- 40: Rast-/Schnappverbindung
- 50: Eckbereich
- 60, 61: Rundungsradius
- 70: Sollverformungsbereich
- 80: Abschrägung

## Patentansprüche

1. Schichtenspeicher mit einem Gehäuse, zumindest einem zu isolierenden Behälter sowie einer aus Schalen (10), insbesondere Halbschalen (15), gebildeten Isolierung (20),
**dadurch gekennzeichnet, daß**
an den Halbschalen (15) auf der dem Behälter und/oder dem Gehäuse zugewandten Seite eine Erhebungen (30) oder Schikanen aufweisende Strukturierung (35) vorgesehen ist.

2. Schichtenspeicher nach Anspruch 1,
**dadurch gekennzeichnet, daß**
die Erhebungen (30) linienförmig ausgebildet sind.

3. Schichtenspeicher nach einem der vorhergehenden Ansprüche,
**dadurch gekennzeichnet, daß**
die Erhebungen (30) so ausgebildet sind, daß sie in montiertem Zustand der Halbschalen (15) zumindest eine den Behälter im wesentlichen horizontal umlaufende Strukturierung (35) ausbilden.

4. Schichtenspeicher nach einem der vorhergehenden Ansprüche
**dadurch gekennzeichnet, daß**
die Halbschalen (15) eines oder mehrere der folgenden Materialen aufweisen: Schaumstoff-Dämmmaterialien und/oder Hartschaumdämmstoffe, insbesondere aus Polystyrol, vorzugsweise expandiertem Polystyrol, Polyurethan, Polyethylen, Aminoplaste(n), Kunststoffharz(en), Polyvinylchlorid.

5. Schichtenspeicher nach einem der vorhergehenden Ansprüche
**dadurch gekennzeichnet, daß**
zusammenwirkende Schalenelemente (10) identisch ausgebildet sind.

6. Schichtenspeicher nach einem der vorhergehenden Ansprüche
**dadurch gekennzeichnet, daß**
zusammenwirkende Schalenelemente (10) mittels zumindest einer Rast- und/oder Schnappverbindung (40) verbindbar sind.

7. Schichtenspeicher nach Anspruch 6,
**dadurch gekennzeichnet, daß**
zusammenwirkende Schalenelemente (10) mittels der Rast- und/oder Schnappverbindung (40) spaltfrei verbunden sind, so daß eine thermische Isolierung der Schalenelemente (10) im Bereich einer Verbindungsstelle im wesentlichen derjenigen von an die Verbindungsstelle angrenzenden Bereichen entspricht.

8. Schichtenspeicher nach einem der Ansprüche 6 oder 7,
**dadurch gekennzeichnet, daß**
Elemente der Rast- und/oder Schnappverbindung (40) einstückig mit dem Schalenelement (10) ausgebildet ist.

9. Schichtenspeicher nach einem der Ansprüche 6 bis 8,
**dadurch gekennzeichnet, daß**
die Rast- und/oder Schnappverbindung (40) nach einem Einrasten oder Einschnappen unlösbar ist.

10. Schichtenspeicher nach einem der vorhergehenden Ansprüche
**dadurch gekennzeichnet, daß**
durch die Strukturierung eine, insbesondere vertikale, Luftzirkulation zwischen dem bzw. den Behälter(n), zwischen dem bzw. den Behälter(n) und der Isolierung (20) sowie zwischen der Isolierung (20) und dem Gehäuse unterbunden ist.

11. Schichtenspeicher nach einem der vorhergehenden Ansprüche
**dadurch gekennzeichnet, daß**
die Strukturierung (35) geeignet ist, insbesondere während des Betriebs des Schichtenspeichers auftretende, Maß-Toleranzen zwischen Isolierung (20) und Behälter und/oder Gehäuse auszugleichen.

12. Schichtenspeicher nach einem der vorhergehenden Ansprüche
**dadurch gekennzeichnet, daß**
die Isolierung (20) so ausgebildet ist, daß sie den Behälter im wesentlichen trägt.

13. Schichtenspeicher nach einem der vorhergehenden Ansprüche
**dadurch gekennzeichnet, daß**
durch die Isolierung (20) eine im wesentlichen gleichmäßige Gewichtsverteilung des Behälters auf eine Konsole gewährleistet ist.

14. Schichtenspeicher nach einem der vorhergehenden Ansprüche
**dadurch gekennzeichnet, daß**
die Isolierung, insbesondere in Eckbereichen (50), eine Geometrie, beispielsweise in Form von Rundungsradien (61, 61) oder Sollverformungsbereichen (70), aufweist, die bei eingebautem Behälter einen erhöhten Anpressdruck der Isolierung (20) an den Behälter bewirkt.

15. Schichtenspeicher nach Anspruch 14,
**dadurch gekennzeichnet, daß**
der Sollverformungsbereich (70) eine reduzierte Materialfestigkeit und/oder Materialdicke aufweist.

16. Schichtenspeicher nach einem der vorhergehenden Ansprüche
**dadurch gekennzeichnet, daß**
ein Zugang zu dem von der Isolierung (20) umgebenen Behälter nur von einer thermisch unkritischen Seite, insbesondere von unten möglich ist.
